# NEUE EUROPÄISCHE PATENTSCHRIFT

(11) **EP 0 870 129 B2**
(45) Veröffentlichungstag und Bekanntmachung des Hinweises auf die Entscheidung über den Einspruch: **14.08.2002**
(45) Hinweis auf die Patenterteilung: 17.03.1999
(21) Anmeldenummer: 96946247.2
(22) Anmeldetag: 23.12.1996
(51) Int. Cl.: F16H 25/20, H02K 7/06

(54) **VORRICHTUNG ZUR UMWANDLUNG EINER DREH- IN EINE AXIALBEWEGUNG**
DEVICE FOR CONVERSION OF ROTARY INTO AXIAL MOVEMENT
DISPOSITIF POUR TRANSFORMER UN MOUVEMENT ROTATIF EN UN MOUVEMENT AXIAL

(30) Priorität: 05.01.1996 DE 19600238
(43) Veröffentlichungstag der Anmeldung: 14.10.1998
(73) Patentinhaber: Wittenstein GmbH & Co. KG, 97999 Igersheim (DE)
(72) Erfinder: BUTSCH, Michael, D-88718 Daisendorf (DE)
(74) Vertreter: Patentanwalts-Partnerschaft Rotermund + Pfusch
(86) Internationale Anmeldenummer: DE9602507
(87) Internationale Veröffentlichungsnummer: WO9725554

(56) Entgegenhaltungen:
- EP-B- 0 320 621
- DE-A- 3 629 281
- DE-A- 3 739 059
- DE-U- 8 530 837
- FR-A- 1 540 855
- US-A- 3 861 221
- VDI-Richtlinien Planetengetriebe - VDI-Richtlinien Planetengetriebe - Begriffe, Symbole, Berechnungsgrundlagen, Begriffe, Symbole, Berechnungsgrundlagen, Seiten 111 bis 130, September 1978 Seiten 111 bis 130, September 1978

## Beschreibung

Die Erfindung betrifft eine Vorrichtung zur Umwandlung einer Dreh- in eine Axialbewegung nach dem Oberbegriff des Patentanspruchs 1.

Eine solche Vorrichtung ist aus US 4,337,671 bekannt.

Aus US 3,861,221 ist eine Vorrichtung zur Umwandlung einer Drehin eine Axialbewegung bekannt, bei der eine Gewindestange auf in einem Planetenträger gelagerte Planetenrollen einwirkt. Hierbei besitzen die Gewindestange und die Planetenräder aufeinander abgestimmte Gewinde. Der Schubkörper wird durch den in diesem axial fixiert drehbar gelagerten Planetenträger verschoben. Ein von der Antriebswelle direkt angetriebener Planetenträger ist dort nicht vorhanden. Soweit in US 3,861,221 ferner eine Ausführung beschrieben ist, bei der übereinstimmend mit derjenigen, auf die sich die Erfindung gattungsgemäß bezieht, der Träger von einer Antriebswelle direkt angetrieben wird, ist dort ein Zahnradantrieb zwischen Antriebswelle und Träger vorgesehen, bei dem die Antriebswelle außerhalb der Achse des Trägers liegt. Dadurch muß auch die Antriebseinrichtung, das heißt der Elektromotor außermittig angeordnet sein mit der Folge, daß keine kompakte, schlanke Form der gattungsgemäßen Einrichtung möglich ist.

Aus DE 36 29 281 A1 ist eine gattungsähnliche Einrichtung bekannt, bei der die Antriebsmittel von einem angetriebenen Schubkörper in der Form eines Rohres übergriffen werden.

Die Erfindung beschäftigt sich mit dem Problem, eine gattungsgemäße, kompakte und schlanke Vorrichtung möglichst funktionssicher und reibverlustarm betreibbar zu gestalten.

Gelöst wird dieses Problem durch eine Ausbildung einer gattungsgemäßen Vorrichtung nach den kennzeichnenden Merkmalen des Patentanspruchs 1.

Bei dieser erfindungsgemäßen Ausführung werden die von den Planetenrollen ausgehenden Axialkräfte von dem zentral angeordneten Lagerkörper aufgenommen und auf die Antriebswelle übertragen.

Bei der Ausführung nach Anspruch 2 erfolgt die Abstützung der von den Planetenrollen zu übertragenden Axialkräfte auf lagertechnisch vorteilhafte Weise.

Bei der Einrichtung, auf die sich die Erfindung bezieht, werden die Planetenrollen in einem Träger, der von einer fest mit diesem verbundenen Welle angetrieben wird, gelagert und sind derart profiliert, daß eine schlupffreie Übertragung der Drehbewegung in eine Axialbewegung des Schubkörpers gewährleistet ist. Ein Schlupf kann im Ergebnis nicht auftreten. Dies ergibt sich aus folgendem. Der Träger rotiert schlupffrei. Die Achsen der Planetenrollen rotieren damit ebenfalls schlupffrei. Dadurch sind die Antriebs-Rillen der Planetenrollen - auch wenn sie in dem Gewinde des Schubkörpers in an sich nicht erwünschter Weise rutschen sollten - dem Gewinde des Schubkörpers in axialer Richtung stets eindeutig zugeordnet.

Die Antriebs-Rillen der Planetenrollen müssen separat nebeneinander liegende, jeweils umlaufend geschlossene Rillen ohne Steigung sein, um bei einem eventuell auftretenden - an sich nicht gewünschten - Schlupf zwischen einer Planetenrolle und dem von dieser angetriebenen Schubkörper eine Verspannung zu vermeiden. Bezüglich eines möglichen Schlupfes zwischen einer Planetenrolle und dem Schubkörper ist nochmals zu bemerken, daß ein solcher im Ergebnis keinen Schlupf zwischen dem Drehantrieb des Trägers und dem Schubkörper bedeutet.

Ein - an sich unbeabsichtigter - Schlupf zwischen einer Planetenrolle und dem Schubkörper führt vielmehr lediglich dazu, daß während des Auftretens eines solchen Schlupfes zwischen der betreffenden Planetenrolle und dem Schubkörper anstelle einer bei fehlendem Schlupf gegebenen Rollreibung eine Gleitreibung auftritt.

Ein besonderer Vorteil der Erfindung besteht darin, daß keine verzahnten Teile eingesetzt werden müssen. Ausgezeichnet geeignet ist eine solche Vorrichtung für Anwendungsfälle mit relativ geringen Übersetzungen und gewünschten hohen Verstellgeschwindigkeiten des Schubkörpers.

Als besonders vorteilhaft ist bei der erfindungsgemäßen Vorrichtung herauszustellen, daß der Schubkörper über eine Strecke ausgefahren werden kann, auf der zuvor kein Führungskörper vorhanden sein muß. Auf diese Art und Weise arbeitet der Schubkörper nach dem Prinzip des freien Vorschubs, vergleichbar mit dem Prinzip eines im freien Vorschub erfolgenden Brückenbaus oder dem Ausfahren eines Kolbens aus einem Hydraulikzylinder.

Ein Ausführungsbeispiel der Erfindung ist in der Zeichnung dargestellt.

Diese zeigt in
- Fig. 1: einen Längsschnitt durch eine Antriebsvorrichtung mit einem hohlen Schubkörper und einem angetriebenen Planetenrollen-Träger die nicht der Erfindung entsprecht,
- Fig. 2: einen Schnitt durch die Antriebseinrichtung nach Linie II-II in Fig. 1,
- Fig. 3: einen Längsschnitt durch eine erfindungsgemäße Antriebsvorrichtung,
- Fig. 4: einen Ausschnitt IV der Vorrichtung nach Fig. 3 mit einem alternativ ausgebildeten Lagerkörper.

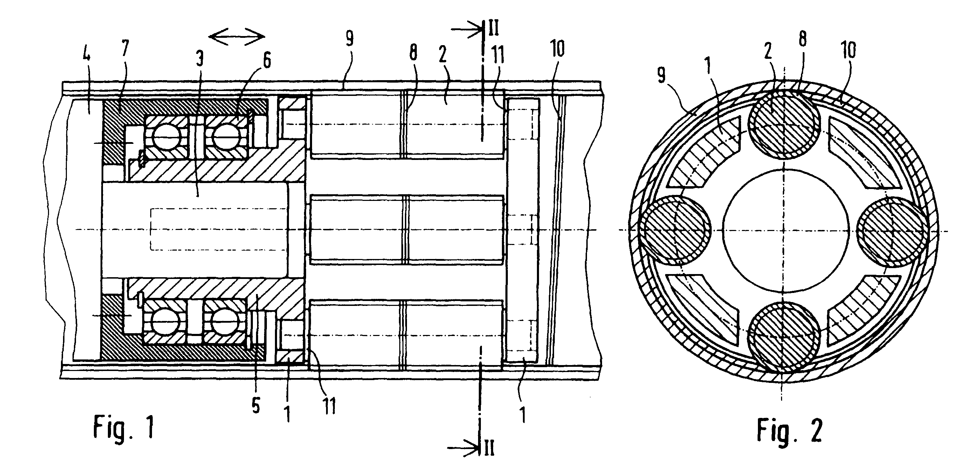

Bei einer Ausführung der Antriebseinrichtung nach Fig. 1 und 2 ist ein Träger mit darin axial fixiert, drehbar gelagerten Planetenrollen 2 verdrehfest mit einer Antriebswelle 3 verbunden. Dabei wird die Antriebswelle 3 von der Abtriebswelle eines Elektromotors 4 gebildet.

Gelagert und axial fixiert ist der Träger 1 über einen Schaft 5 mit auf seinem Außenumfang aufgezogenen Wälzlagern 6, die sich in einem fest mit dem Elektromotor 4 verbundenen Lagerring 7 abstützen.

Bei den Ausführungen nach den Fig. 1 bis 3 sind die Planetenrollen 2 über ihre Länge mit einzelnen umlaufenden Anriebs-Rillen 8 versehen, die jeweils in senkrecht zur Achse der Planetenrollen 2 ausgerichteten Ebenen nebeneinander angeordnet sind.

Der Träger 1 mit den Planetenrollen 2 wird von einem als Rohr 9 ausgebildeten Schubkörper umschlossen. Auf seinem Innenumfang besitzt das Rohr 9 eine gewindeartig verlaufende Rille 10, in die die Planetenrollen 2 mit ihren Antriebs-Rillen 8 eingreifen.

Bei einem durch den Elektromotor 4 angetriebenen Träger 1 rollen die Planetenrollen 2 über ihre Antriebs-Rillen 8 in der Gegenrille 10 des Rohres 9 ab, das sie entsprechend der Steigung der gewindeartigen Rille 10 im Verhältnis zu der Antriebsdrehzahl des Elektromotors mit einer entsprechenden Übersetzung axial verschieben.

Axial fixiert sind die Planetenrollen 2 bei der Ausführung nach Fig. 1 und 2 über Ringscheiben 11, die zwischen den Stirnseiten der Planetenrolle 2 und dem Träger 1 frei drehbar vorgesehen sind.

Sollte einmal temporär ein Schlupf zwischen einer Planetenrolle 2 und dem Rohr 9 auftreten, so ändert dies an dem exakten Übersetzungsverhältnis zwischen Antriebsdrehzahl des Elektromotors und Axialverschiebeweg des Rohres 9 nichts; es tritt vielmehr lediglich anstelle der üblichen Rollreibung zwischen der betreffenden Planetenrolle 2 und dem Rohr 9 während dieser Zeit eine Gleitreibung auf. Dies läßt sich damit vergleichen, daß bei drehendem Träger 1 ein Nichtdrehen der Planetenrollen 2 um deren Achsen unterstellt wird. In einem solchen Falle würde der Träger 1 mit den feststehenden Planetenrollen 2 wie eine Schraube in einer von dem Rohr 9 gebildeten Mutter wirken.

Zu den Planetenrollen 2 mit den Antriebs-Rillen 8 ist noch zu bemerken, daß die Rillen 8 der einzelnen Planetenrollen 2 in Längsrichtung der Steigung des Gewindeganges innerhalb des Rohres 9 entsprechend versetzt sein müssen, wenn in dem Rohr 9 lediglich ein Gewindegang vorgesehen ist.

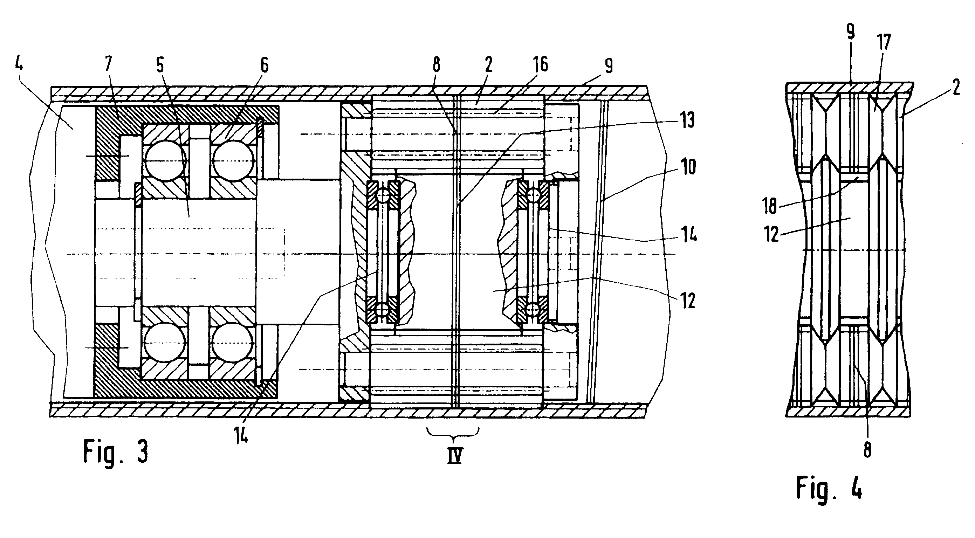

Die Ausführung nach Fig. 3 unterscheidet sich von derjenigen nach Fig. 1 und 2 durch die erfindungsgemäße axiale Fixierung und Lagerung der Planetenrollen 2 in dem Träger 1 einerseits und des Trägers 1 gegenüber dem Lagerring 7 andererseits. Radial innerhalb der Umlaufbahn der Planetenrollen 2 ist ein in der Achse des Trägers 1 drehbarer Lagerkörper 12 mit einer kreiszylindrischen Außenfläche vorgesehen. Dieser Lagerkörper 12 ist mit umlaufenden Rillen 13 versehen, in die die Planetenrollen 2 mit ihren Antriebs-Rillen 8 eingreifen. Durch den gegenseitigen Eingriff der Antriebs-Rillen 8 der Planetenrollen 2 sowie der Rillen 13 des Lagerkörpers 12 sind die Planetenrollen 2 axial fixierbar. Dies geschieht dadurch, daß der um die Achse des Trägers 1 frei drehbare Lagerkörper 12 sich innerhalb des Trägers 1 über axiale Wälzlager 12 definiert abstützt. Die Planetenrollen 2 sind auf Bolzen des Trägers 1 über Nadellager 16 drehbar gelagert.

Gemäß der Ausführung nach Fig. 4 kann die axiale Abstützung der Planetenrollen 2 an dem Lagerkörper 12 über von den Antriebs-Rillen 8 der Planetenrollen 2 getrennte Lagerrillen erfolgen. Solche Lagerrillen 17 sind jeweils tiefer als die Antriebs-Rillen 8 und befinden sich bei den Planetenrollen 2 in axial zwischen den Antriebs-Rillen 8 vorgesehenen Bereichen. Besitzen die Planetenrollen 2 spezielle Lagerrillen 17, dann ist der Lagerkörper 12 ausschließlich mit formschlüssig zugeordneten Rillen 18 versehen, d.h. in diesem Fall rollen die Antriebs-Rillen 8 nicht in entsprechenden Gegenrillen des Lagerkörpers ab.

Der Schaft 5 des Trägers 1 nimmt radial innen die Wälzlager 6 auf, die radial außen in dem Lagerring 7 des Motors 4 geführt und fixiert sind. Der Schaft 5 besitzt eine Sacklochbohrung 15, in die form- und/oder kraftschlüssig die Abtriebswelle eines Elektromotors 4 zum Antrieb dieses Schaftes 5 eingreifen kann.

## Patentansprüche

1. Vorrichtung zur Umwandlung einer Dreh- in eine Axialbewegung mit von einer Antriebswelle (3) angetriebenen, umfangsmäßig auf gleichem Abstand gehaltenen Planetenrollen (2) und einem durch die Planetenrollen (2) axial verschiebbaren Schubkörper (9), bei der
- die Planetenrollen (2) in einem um seine Achse angetriebenen Träger (1) axial fixiert, drehbar gelagert und mit in Ebenen senkrecht zu den Achsen der Planetenrollen (2) jeweils verlaufenden Antriebsrillen (8) versehen sind,
- der Träger (1) fest mit der in seiner Achse rotierenden Antriebswelle (3) verbunden ist,
- die Planetenrollen (2) über die Antriebsrillen (8) in mindestens eine gewindeartige Rille (10) des längs der Achse des Trägers (1) verschiebbaren Schubkörpers (9) eingreifen,
- der Träger (1) die Planetenrollen (2) antreibt,
- der Schubkörper (9) als ein die Planetenrollen (2) umfassender Hohlkörper ausgebildet ist,
**gekennzeichnet durch die Merkmale,**
der Träger (1) mit den darin gelagerten Planetenrollen (2) ist zusammen mit der Antriebswelle (3) und einem die Antriebswelle (3) antreibenden Elektromotor (4) als eine von dem Schubkörper (9) in Form eines Rohres übergriffene Antriebseinrichtung ausgebildet,
im Zentrum des Trägers (1) ist radial innerhalb der Planetenrollen (2) ein um dessen Achse drehbarer, gegenüber diesem Träger (1) axial wälzgelagert fixierter, radial außen kreiszylindrischer mit einem Bereich umlaufender Rillen (18 oder 13) ausgestatteter Lagerkörper (12) vorgesehen, wobei dieser Bereich in einen zugeordneten, mit Rillen (17 bzw. 8) versehenen Bereich der Planetenrollen (2) eingreift.

2. Vorrichtung nach Anspruch 1,
**dadurch gekennzeichnet,**
**daß** der Träger (1) über einen Schaft (5) mit der Antriebswelle (3) verbunden ist, wobei der Schaft (5) über Wälzlager (6) in einem Lagerring (7) des Elektromotors (4) gelagert ist.

## Claims

1. A device for converting rotary motion into axial motion, having planet rollers which are driven by a drive shaft (3) and held circumferentially at equal spacings, and having a thrust element (9) which can be displaced axially by the planet rollers (2), in which device:
- the planet rollers (2) are axially fixed in a carrier (1) that is driven about its axis; are rotatably mounted; and have drive grooves (8), each of which extends in planes at right angles to the axes of the planet rollers (2);
- the carrier (1) is firmly connected to the drive shaft (3), which rotates in the axle of the carrier;
- the planet rollers (2), by way of the drive grooves (8) engage at least one thread-like groove (10) of the thrust element (9) which can be displaced along the axis of the carrier (1);
- the carrier (1) drives the planet rollers (2); and
- the thrust element (9) is a hollow body enclosing the planet rollers (2);
**characterised by the following features:**
the carrier (1) with the planet rollers (2) arranged therein, together with the drive shaft (3) and an electric motor (4) driving the drive shaft (3), is designed as a drive device shaped as a tube, enclosed by the thrust element (9);
in the centre of the carrier (1), radially inside the planet rollers (2), there is a bearing element (12) which is rotatable about the axis of said carrier (1) and which is axially fixed in relation to said carrier (1) by rolling-contact bearings; with said bearing element (12) being of regularly cylindrical shape on the outside in radial direction, comprising a region of circumferential grooves (18 or 13), with this region engaging an associated region of the planet rollers (2) which has grooves (17 and 8), respectively.

2. A device according to claim 1,
**characterised in that**
the carrier (1) is connected to the drive shaft (3) via a shaft (5), with the shaft (5) being mounted in a bearing ring (7) of the electric motor (4) via rolling-contact bearings (6).

## Revendications

1. Dispositif pour la transformation d'un mouvement rotatif en un mouvement axial, comportant des rouleaux satellites (2) montés à égale distance les uns des autres à la périphérie et entraînés par un arbre d'entraînement (3), et un corps poussé (9) déplaçable axialement par les rouleaux satellites (2), dans lequel
- les rouleaux satellites (2) sont montés tournants et fixés axialement dans un châssis (1) entraîné autour de son axe, et sont pourvus de sillons d'entraînement (8) s'étendant respectivement dans des plans perpendiculaires aux axes des rouleaux satellites (2),
- le châssis (1) est solidaire de l'arbre d'entraînement (3) qui tourne autour de son axe,
- les rouleaux satellites (2) s'engagent, par l'intermédiaire des sillons d'entraînement (8), dans au moins un sillon du genre filetage (10) du corps poussé (9) déplaçable le long de l'axe du châssis (1),
- le châssis (1) entraîne les rouleaux satellites (2),
- le corps poussé (9) est réalisé sous forme d'un corps creux qui entoure les rouleaux satellites (2),
**caractérisé en ce que**
le châssis (1), avec les rouleaux satellites (2) montés dans ce dernier, est réalisé, avec l'arbre d'entraînement (3) et un moteur électrique (4) entraînant l'arbre d'entraînement, en tant que dispositif d'entraînement recouvert par le corps poussé (9) en forme d'un tube,
au centre du châssis (1) est prévu, radialement à l'intérieur des rouleaux satellites (2), un corps d'appui (12) pouvant tourner autour de l'axe de celui-ci, fixé axialement par des roulements par rapport à ce châssis (1), cylindrique circulaire radialement à l'extérieur, muni d'une zone de sillons circonférentiels (18 ou 13), cette zone s'engageant dans une zone associée des rouleaux satellites (2) pourvue de sillons (17 ou 8).

2. Dispositif suivant la revendication 1,
**caractérisé en ce**
**que** le châssis (1) est joint à l'arbre d'entraînement (3) par une queue (5), la queue (5) étant montée dans une bague d'appui (7) du moteur électrique (4) au moyen de roulements (6).
